# EUROPEAN PATENT SPECIFICATION

(11) **EP 2 922 685 B1**
(45) Date of publication and mention of the grant of the patent: **17.04.2019**
(21) Application number: 13799452.1
(22) Date of filing: 18.11.2013
(51) Int. Cl.: B29C 65/00, B29C 65/48, B29C 70/30, B29L 31/30, C09J 5/02, F16B 11/00

(54) **BONDING OF COMPOSITE MATERIALS**
BONDING VON VERBUNDSTOFFEN
LIAISON DE MATIÈRES COMPOSITES

(30) Priority: 26.11.2012 US 201261729650 P
(43) Date of publication of application: 30.09.2015
(73) Proprietor: Cytec Industries Inc., Princeton, NJ 08540 (US)
(72) Inventor: MacADAMS, Leonard, A., Bellmawr, NJ 08031 (US); KOHLI, Dalip, K., Churchville, MD 21028 (US)
(74) Representative: Vande Gucht, Anne
(86) International application number: PCT/US2013/070506
(87) International publication number: WO 2014/081652

(56) References cited:
- WO-A1-2012/002340
- DATABASE WPI Week 199712 Thomson Scientific, London, GB; AN 1997-127679 XP002735285, -& JP H09 11371 A (SHOWA HIKOUKI KOGYO KK) 14 January 1997 (1997-01-14)

## Description

### BACKGROUND

Fiber-reinforced, polymeric composites are high-performance structural materials that have been used for fabricating structural parts that require high strength and/or low weight, and resistance to aggressive environments. Examples of such structural parts include aircraft components (e.g. tails, wings, fuselages, propellers), automotive parts, wind blades etc. The fibers reinforce the matrix resin, bearing the majority of the load supported by the composite, while the resin matrix bears a minority portion of the load supported by the composite and also transfers load from broken fibers to intact fibers. In this manner, these polymeric composites can support greater loads than the loads that either the matrix resin or the fibers can support alone. Furthermore, by tailoring the reinforcing fibers in a particular geometry or orientation, the composite can be efficiently designed to minimize weight and volume.
Adhesive bonding has been conventionally used as a method of joining structural components in the manufacturing of primary and secondary aircraft structures. Typically, structural adhesives are used in combination with mechanical fasteners (e.g. rivets, screws, and bolts) to safely and reliably secure structural materials. Rarely are structural adhesives used as the sole mechanism for joining structural parts, except in the case of secondary components. Adhesively bonded parts exhibit significant advantages over parts joined by mechanical fasteners including: lighter weight, reduced stress concentrations, durability, lower part count, etc. However, the widespread use of structural adhesives in the aerospace industry faces large obstacles due to concerns over reliability and bond line quality of adhesively bonded joints. In order to increase the use of adhesives as the sole major source of bonding, it is necessary to demonstrate that film adhesives can be used in a manufacturing environment as a method of creating reliable bonds with exceptional reproducibility of bond line quality.

### SUMMARY

Disclosed herein is a B-staged bonding method that allows for bonding of composite substrates without the need for a separate surface preparation step.

### BRIEF DESCRIPTION OF THE DRAWINGS

FIG. 1 shows Differential Scanning Calorimeter (DSC) analysis of CYCOM 5320-1 epoxy-based resin.
FIG. 2 shows DSC traces of CYCOM 5320-1 epoxy-based resin at 135°C (275 °F), 149°C (300 °F), and 163°C (325 °F).
FIG. 3 shows DSC trace of CYCOM 5320-1 epoxy-based resin at 121°C (250 °F).
FIG. 4 is a micrograph image showing the interface of a bonded structure formed by staged bonding.
FIG. 5 is a micrograph image showing the interface of a secondary bonded structure.

### DETAILED DESCRIPTION

For joining composite parts made of fiber-reinforced polymeric composites, conventional adhesive bonding methods include co-curing, co-bonding, and secondary bonding.

"Secondary bonding" is the joining together of *pre-cured* composite parts by adhesive bonding, wherein only the adhesive is being cured. This bonding method typically requires surface preparation of each previously cured composite part at the bonding surfaces. Surface preparation generally consists of applying a peel ply, grit blasting with abrasive media, plasma treatment, or some other process that creates a bonding site to facilitate mechanical interlocking between the adhesive and the composite. For instance, in metal bonding and secondary bonding of pre-cured composite parts, which is the typical bonding process used in aircraft manufacturing, the adhesive bonds through a predominantly mechanical interlocking mechanism, wherein the adhesive flows into micro-channels at the composite surface, and mechanically fix the adherends to one another.

"Co-bonding" involves joining a pre-cured composite part to an uncured composite part by adhesive bonding, wherein the adhesive and the uncured composite part are being cured simultaneously during bonding. The pre-cured composite requires an additional surface preparation step prior to adhesive bonding as described in secondary bonding above. Disadvantages of this bonding method are that the pre-cured composite does not chemically bond to the adhesive and the uncured prepreg composite can be difficult to handle and shape into complex parts.

"Co-curing" involves joining *uncured* composite parts by simultaneously curing and bonding, wherein the composite parts are being cured together with the adhesive, resulting in chemical bonding. However, it is difficult to apply this technique to the bonding of uncured prepregs to fabricate large structural parts with complex shapes. Uncured prepregs are difficult to handle and lack the rigidity necessary to be self-supporting. As such, it is difficult to assemble and bond uncured prepregs on tools with complex three-dimensional shapes.

It is known in the industry that mold release material is a common contaminate that can disrupt the mechanism of adhesive bonding and cause loss of strength at the bonded joint in a composite structure. Mold release materials (e.g. natural or synthetic materials including silicone, mineral oils, waxes, fatty acid derivatives, glycols, fluorinated hydrocarbons, etc.) are usually formed on the molds for facilitating the release of the molded laminated structures from the molds in which they are formed. For this reason, as well as for eliminating the potential of contamination from other materials, composite substrates undergo a surface preparation treatment prior to adhesive bonding to increase the mechanical roughness and/or to clean the surface from contaminants. Surface preparation generally consists of applying a peel ply, grit blasting, or some other process that creates a bonding site to facilitate mechanical interlocking between the adhesive and the composite.

Without chemical bonding, the so-called condition of a "weak bond" exists when a bonded joint is either loaded by peel forces or exposed to the environment over a long period of time, or both. Adhesion failure, which indicates the lack of chemical bonding between the substrate and the adhesive material, is considered an unacceptable failure
mode in all test types. It is desirable to develop a bonding technology that fully integrates the adhesive film into the composite structure, creating a continuous "adhesive-free" structure (i.e. without a distinct adhesive layer at the interface region) by chemical bond formation.

It has been discovered that staging curable or uncured composite substrates to a specific cure level of 25 %-70 % or 25%-50% or 40%-60% - prior to adhesive bonding renders the composite substrates immune to contamination (such as mold release chemicals) and allows for a bonding process that does not require the conventional surface preparation. At certain staging levels (at least 25% but less than 70%), the composite substrates exhibit sufficient rigidity for assembly purposes but the matrix resin therein is able to undergo elastic deformation during final cure/adhesive bonding. Since the matrix resin is not fully cured after staging, chemical bonding and intermingling between the matrix resin material and the adhesive can occur during the final cure stage, thereby resulting in an improved physical and chemical bonding at the interface between composite substrates.

The staged bonding process disclosed herein is in addition to any previous partial curing that may have been carried out during the manufacturing of individual prepregs. If partially cured during prepreg manufacturing, the level of cure for conventional prepregs is usually less than 10%. At such low level of cure, the prepregs would still have high tackand drape characteristics and would have no rigidity.

The initial composite substrates to be bonded by the staged bonding process disclosed herein are substrates composed of reinforcement fibers embedded in or impregnated with a curable matrix resin, selected from uncured or curable prepregs and prepreg layups. The term "curable" as used in this context refers to an uncured condition or having a level of cure of less than 10%.

The bonding method disclosed herein is an easy-to-use method that creates covalent chemical bonds between the composite substrate and the adhesive via B-stage curing of the composite substrate. This approach offers the ability to couple the chemical bonding achieved via co-cure bonding with the processing advantages of secondary bonding.

Furthermore, the staging operation stabilizes the matrix resin of the composite prior to bonding, thus improving the handling and assembly of the composite material. Staging aids in elevating the glass transition temperature (T_{g}) of the material sufficiently high to allow prolonged room temperature storage of the staged composite substrates. Testing has indicated that the fully cured, bonded substrates exhibit improved mechanical properties such as high lap shear strength.

According to one embodiment, the B-staged bonding process of the present disclosure may comprise:
a) providing at least two prepreg layups according to claim 1;
b) partially curing one of the prepreg layups to a degree of cure of 25% to 70%;
c) applying a curable adhesive on at least one of the prepreg layups;
d) joining the prepreg layups to each other with the adhesive between the prepreg layups; and
e) co-curing the joined prepreg layups to form a completely bonded composite structure,

Following full curing, the adhesive is chemically bonded to and mechanically diffused with the polymeric resin matrix of the composite substrates, resulting in a chemically bonded interface between the adhesive and each composite substrate. In a preferred embodiment, steps (a)-(d) are carried out without any intervening surface treatment of the uncured, composite substrates to create texturized surface or to increase/affect surface morphology.

"Surface preparation" as used herein refers to - a surface treatment that creates a bonding site to facilitate mechanical interlocking between the adhesive and the composite substrate, such as applying a peel ply, grit blasting, plasma exposure, or some other process that physically modifies/roughens/texturizes the surface.

The "chemical bond formation" which occurs between the partially cured composite substrates and the adhesive is defined as - a bond that forms between reactive moieties present in the adhesive matrix and chemically reactive groups in the composite matrix. Such chemical bonds are formed between the reactive constituents present in the adhesive and composite matrix. For example, when the matrix resin of the composite substrates and the adhesive contain epoxy resins and amine curing agents, covalent bonds may be formed from the reaction of epoxide groups in composite matrix resin with the amine groups in the adhesive and vice versa.

The terms "cure" and "curing" as used herein encompass polymerizing and/or crosslinking of a polymeric material. Curing may be performed by processes that include, but are not limited to, heating, exposure to ultraviolet light, and exposure to radiation.

The partial cure degree (or level) for B-staging may be determined by using Differential Scanning Calorimetry (DSC). DSC can be measured by heating a composite material either isothermally or dynamically at a specified temperature for a set time. The temperature is maintained until the composite material is fully cured. Integration of the exothermic heat of reaction peak allowed for a direct correlation between time at temperature and degree of cure.

### Composite Substrates and Prepregs

Composite substrates in this context refer to fiber-reinforced resin composites, including prepregs or prepreg layups (such as those used for making aerospace composite structures). The term "prepreg" as used herein refers to a layer of fibrous material (e.g. unidirectional tows or tape, nonwoven mat, or fabric ply) that has been impregnated with a curable matrix resin. The term "prepreg layup" as used herein refers to a plurality of prepreg plies that have been laid up in a stacking arrangement. The layup process may be done manually or by an automated process such as Automated Tape Laying (ATL). The prepreg plies within the layup may be positioned in a selected orientation with respect to one another. For example, prepreg layups may comprise prepreg plies having unidirectional fiber architectures, with the fibers oriented at a selected angle θ, e.g. 0°, 45°, or 90°, with respect to the largest dimension of the layup, such as the length. It should be further understood that, in certain embodiments, prepregs may have any combination of fiber architectures, such as unidirectional fibers, multi-directional fibers, and woven fabrics.

Prepregs may be manufactured by infusing or impregnating continuous fibers or woven fabric with a matrix resin system, creating a pliable and tacky sheet of material. This is often referred to as a prepregging process. The precise specification of the fibers, their orientation and the formulation of the resin matrix can be specified to achieve the optimum performance for the intended use of the prepregs. The volume of fibers per square meter can also be specified according to requirements.

In prepregging, the reinforcing fibers are impregnated with the matrix resin in a controlled fashion and then frozen in order to inhibit polymerization of the resin. The frozen prepregs are then shipped and stored in the frozen condition until needed. When manufacturing composite parts from prepregs, the prepregs are thawed to room temperature, cut to size, and assembled on a molding tool. Once in place, the prepregs are consolidated and cured under pressure to achieve the required fiber volume fraction with a minimum of voids.

The term "impregnate" as used herein refers to the introduction of a curable matrix resin material to reinforcement fibers so as to partially or fully encapsulate the fibers with the resin. The matrix resin for making prepregs may take the form of resin films or liquids. Moreover, the matrix resin is in a curable/uncured state prior to bonding. Impregnation may be facilitated by the application heat and/or pressure.

As an example, the impregnating method may include:
(1) Continuously moving fibers through a (heated) bath of molten impregnating matrix resin composition to fully or substantially fully wet out the fibers; or
(2) Pressing top and bottom resin films against continuous, unidirectional fibers arranged in parallel or a fabric ply.

### Reinforcement fibers

The reinforcement fibers for fabricating composite substrates (or prepregs) may take the form of chopped fibers, continuous fibers, filaments, tows, bundles, sheets, plies, and combinations thereof. Continuous fibers may further adopt any of unidirectional (aligned in one direction), multi-directional (aligned in different directions), non-woven, woven, knitted, stitched, wound, and braided configurations, as well as swirl mat, felt mat, and chopped mat structures. Woven fiber structures may comprise a plurality of woven tows, each tow composed of a plurality of filaments, e.g. thousands of filaments. In further embodiments, the tows may be held in position by cross-tow stitches, weft-insertion knitting stitches, or a small amount of resin binder, such as a thermoplastic resin.

The fiber composition includes, but are not limited to, glass (including Electrical or E-glass), carbon, graphite, aramid, polyamide, high-modulus polyethylene (PE), polyester, poly-p-phenylene-benzoxazole (PBO), boron, quartz, basalt, ceramic, and combinations thereof.

For the fabrication of high-strength composite materials, e.g. for aerospace and automotive applications, it is preferred that the reinforcing fibers have the tensile strength of greater than 3500 MPa.

### Matrix resin

Generally, the resin matrix contains one or more thermoset resins as the major component in combination with minor amounts of additives such as curing agents, catalysts, co-monomers, rheology control agents, tackifiers, rheology modifiers, inorganic or organic fillers, thermoplastic or elastomeric toughening agents, stabilizers, inhibitors, pigments/dyes, flame retardants, reactive diluents, and other additives well known to those skilled in the art for modifying the properties of the resin matrix before or after curing.

The thermoset resins may include, but are not limited to, epoxy, unsaturated polyester resin, bismaleimide, polyimide, cyanate ester, phenolic, etc. In one embodiment, the resin matrix is an epoxy-based resin formulation which contains one or more multifunctional epoxy resins (i.e. polyepoxides) as the main polymeric component.

Suitable epoxy resins include polyglycidyl derivatives of aromatic diamine, aromatic mono primary amines, aminophenols, polyhydric phenols, polyhydric alcohols, polycarboxylic acids. Examples of suitable epoxy resins include polyglycidyl ethers of the bisphenols such as bisphenol A, bisphenol F, bisphenol S and bisphenol K; and polyglycidyl ethers of cresol and phenol based novolacs.

The addition of curing agent(s) and/or catalyst(s) may increase the cure rate and/or reduce the cure temperatures of the matrix resin. The curing agent for thermoset resins is suitably selected from known curing agents, for example, guanidines (including substituted guanidines), ureas (including substituted ureas), melamine resins, guanamine derivatives, amines (including primary and secondary amines, aliphatic and aromatic amines), amides, anhydrides (including polycarboxylic anhydrides), and mixtures thereof.

The toughening agents may include thermoplastic and elastomeric polymers, and polymeric particles such as core-shell rubber particles, polyimide particles, polyamide particles.

Inorganic fillers may include fumed silica, quartz powder, alumina, platy fillers such as mica, talc or clay (e.g., kaolin).

### Adhesive

The adhesive for bonding composite substrates is a curable composition suitable for co-curing with the uncured composite substrates. The curable adhesive composition may comprise one or more thermoset resins, curing agent(s) and/or catalyst(s), and optionally, toughening agents, filler materials, flow control agents, dyes, etc. The thermoset resins include, but are not limited to, epoxy, unsaturated polyester resin, bismaleimide, polyimide, cyanate ester, phenolic, etc.

The epoxy resins that may be used for the curable adhesive composition include multifunctional epoxy resins having a plurality of epoxy groups per molecule, such as those disclosed for the matrix resin.

The curing agents may include, for example, guanidines (including substituted guanidines), ureas (including substituted ureas), melamine resins, guanamine derivatives, amines (including primary and secondary amines, aliphatic and aromatic amines), amides, anhydrides, and mixtures thereof. Suitable curing agents include latent amine-based curing agents, which can be activated at a temperature greater than 71°C (160°F), preferably greater than 93°C (200°F), e.g. 177°C (350°F). Examples of suitable latent amine-based curing agents include dicyandiamide (DICY), guanamine, guanidine, aminoguanidine, and derivatives thereof. A particularly suitable latent amine-based curing agent is dicyandiamide (DICY).

A curing accelerator may be used in conjunction with the latent amine-based curing agent to promote the curing reaction between the epoxy resins and the amine-based curing agent. Suitable curing accelerators may include alkyl and aryl substituted ureas (including aromatic or alicyclic dimethyl urea); bisureas based on toluenediamine or methylene dianiline. An example of bisurea is 2,4-toluene bis(dimethyl urea). As an example, dicyandiamide may be used in combination with a substituted bisurea as a curing accelerator.

Toughening agents may include thermoplastic or elastomeric polymers, and polymeric particles such as core-shell rubber particles. Inorganic fillers may include fumed silica, quartz powder, alumina, platy fillers such as mica, talc or clay (e.g., kaolin).

In one embodiment the adhesive is an epoxy-based composition curable at temperatures above 93°C (200°F), e.g. 176.7°C (350°F).

### Bonded Structures

In one embodiment, a plurality of uncured or curable prepreg plies (having less than 10% degree of cure) are laid up on a tool and partially cured to 25%-75% cure level, thereby forming a first B-staged prepreg layup. The tool may have a non-planar, three-dimensional molding surface for shaping the prepregs to a desirable configuration. The molding surface may be coated with a mold release material (e.g. silicon-based film). A second B-staged prepreg layup is also formed in the same manner. Next, the B-staged layups are adhesively joined to each other, with tool-side facing each other and a curable adhesive film there between. The resulting assembly is then cured to form an integrated composite structure. The matrix resin in the prepreg layups and the adhesive are fully cured simultaneously in this final curing step. It should be pointed out that the B-staged prepreg layups are brought directly from the tool to bonding without any intervening surface modification treatment.

In another embodiment, a plurality of uncured prepreg plies are laid up on a tool and partially cured to 25%-75% cure level, thereby forming a first B-staged prepreg layup. The tool may have a non-planar, three-dimensional molding surface for shaping the prepregs to a desirable configuration. The molding surface may be coated with a mold release material (e.g. silicon-based film). The B-staged layup is then adhesively joined to an uncured prepreg ply or prepreg layup, with the tool-side of the layup facing the uncured prepreg ply/layup. Upon full curing, the resulting assembly is chemically bonded.

The cure bonding of the adhesively-joined composite substrates or prepreg laminates as disclosed herein may be carried out by using an autoclave (a heated pressure vessel) or an out-of-autoclave process, or any other conventional process of applying heat and pressure, either together or separately.

As an example, a vacuum bag setup may be used for such cure bonding. In this setup, a composite laminate is assembled on a tool, a vacuum bag is placed over and sealed around the entire composite laminate, and the laminate together with the tool are placed in an autoclave to cure the laminate. During curing, vacuum is applied to the vacuum bag, and the autoclave is pressurized so as to compact the laminate onto the upper surface of the tool. After the curing process is complete, the compacted and cured composite laminate is removed from the tool.

In out-of-autoclave (OOA) processing, the laminate to be cured is enclosed within a vacuum bag enclosure and subjected to vacuum pressure only (no autoclave pressure). The laminate is then heated without using an autoclave. This manner of processing is also referred to as vacuum-bag-only (VBO) processing.

A vacuum-bag setup, or Vacuum Bag Only (VBO), may be used to form a shaped composite structure from prepregs. For example, a mold with three-dimensional surface is created and the prepreg plies that will form the composite structure are then laid up on to the surface of the mold. The prepreg layup is then consolidated by covering the component with a polymeric film (e.g. nylon) which is sealed to the periphery of the mold with a strip of plastic. A vacuum is then applied to the enclosed space and atmospheric pressure consolidates the layup. Following consolidation, the mold together with the prepreg layup is placed in an autoclave or oven for curing.

In certain embodiments, the fully cured, bonded composite structure exhibits an adhesive bond strength of greater than 27.6 MPa (4,000 psi) at about room temperature (75 °F or 24°C), and greater than 20.7 MPa (3,000 psi) at 121°C (250 °F), as measured by Lap Shear Test using ASTM D1002. Additionally, the bonded composite structure provides a cohesive failure and exhibits a Mode I fracture toughness of approximately 650 J/m² or greater as determined by G_{1c} testing according to ASTM D5528.

Lap Shear test determines the shear strength of adhesives for bonding materials when tested on a single-lap-joint specimen. Two test specimens are bonded together with adhesive and cured as specified. The test specimens are placed in the grips of a universal testing machine and pulled at a pre-determined loading rate until failure.

Fracture toughness is a property which describes the ability of a material containing a crack to resist fracture, and is one of the most important properties of a material for aerospace applications. Fracture toughness is a quantitative way of expressing a material's resistance to brittle fracture when a crack is present. Fracture toughness may be quantified as strain energy release rate (G_{c}), which is the energy dissipated during fracture per unit of newly created fracture surface area. G_{c} includes G_{IC} (Mode 1 - opening mode). The subscript "Ic" denotes Mode I crack opening, which is formed under a normal tensile stress perpendicular to the crack.

### EXAMPLES

The following examples are provided for the purposes of illustrating how the cure levels may be determined and the various embodiments for bonding composite structures, but they are not intended to limit the scope of the present disclosure.

### Determining Cure Levels

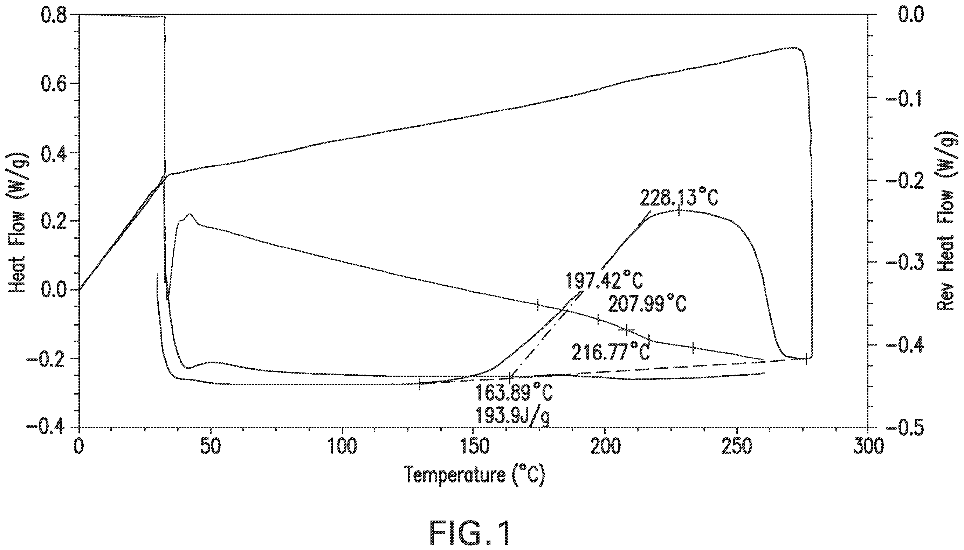

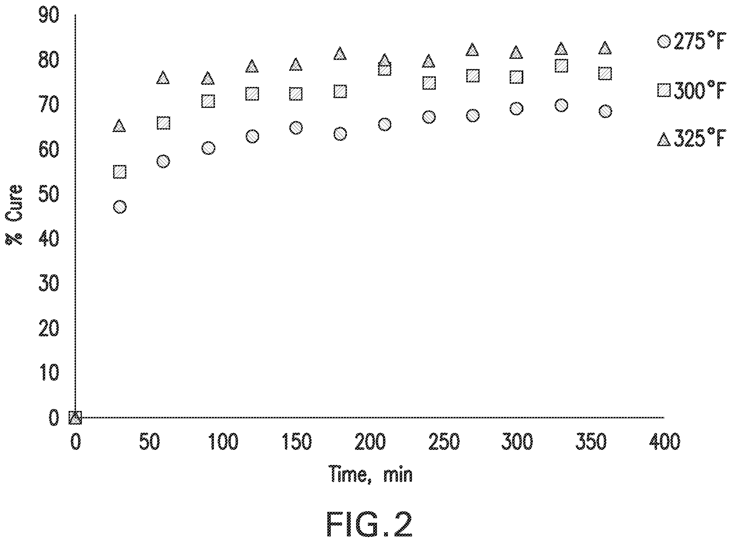

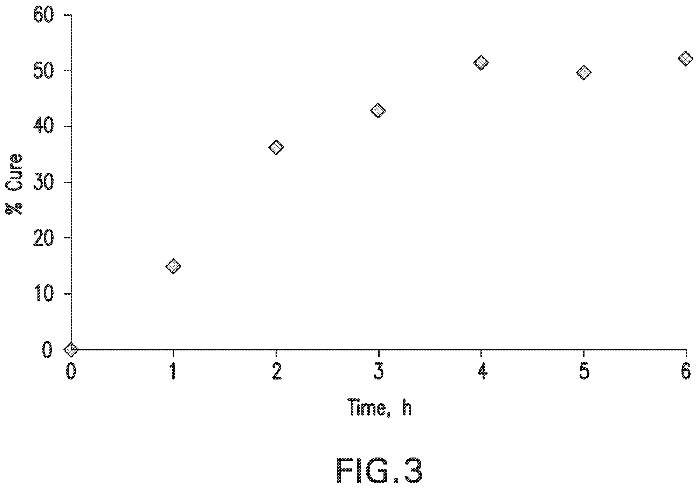

In the following examples, DSC was used to determine the composite thermal cure cycles to achieve the desired degree of staging. DSC was measured using a TA Instruments Q20 DSC by heating the samples either isothermally or dynamically in aluminum crucibles at a specified temperature for a set time. The temperature was maintained until the composite was fully cured. Integration of the exothermic heat of reaction peak allowed for a direct correlation between time at temperature and degree of cure. FIG. 1 shows a representative DSC results for CYCOM 5320-1 (epoxy matrix/carbon fiber prepreg tape from Cytec Industries Inc.). FIG. 2 and FIG. 3 show additional DSC traces for CYCOM 5320-1 that were used to determine degree of cure.

A TA Instruments AR200 EX rheometer was used to make dynamic mechanical measurements in the torsional mode at a ramp rate of 3 °C/min from 40 °C to 300 °C. Samples were cured into 50.8 mm x 12.7 mm x 3.2 mm (2" x 0.5" x 0.125") specimens and strained at 3 %. Thermomechanical analysis (TMA) was determined with a TA Instruments TMA Q400. The TMA experiments were carried out from 40°C to 200 °C at a scan rate of 10 °C min⁻¹ with a flexural probe under an applied constant load of 0.100 N. Softening temperatures (Tₛ) were taken as the onset of probe displacement on the TMA traces.

### Composite Fabrication

### Co-Cure

Co-cured bonded panels, which were used as control specimens, were bonded by laying up 10 plies of epoxy/carbon fiber prepreg tape in a 0° unidirectional design on a tool. FM 309-1 adhesive (epoxy-based adhesive curable at 176.7 °C (350 °F), available from Cytec Industries Inc.) was placed on top of the prepreg tape and 10 plies of tape prepreg in a 0° unidirectional arrangement was placed on top of that. The entire assembly was then co-cured in either a vacuum bag only or autoclave cure process by following the suggested composite cure cycle profile.

### Secondary Bonding and Staged Composite Bonding

Secondary bonded and staged-bonded composite panels were fabricated by laying up 10 plies of epoxy/carbon fiber prepreg tape in a 0° unidirectional design (as 30.5 cm x 30.5 cm (12" x 12" coupons)). Mold release was applied to a tool surface and put in direct contact with the composite panel during fabrication. Composite panels were then fully cured or partially staged using either an out-of-autoclave (OOA) method, in which a vacuum bagging scheme was used to generate an external pressure to the composite panels during cure, or an autoclave to achieve the desired cure level. To demonstrate the ability of the staged bonded composite panels to resist contamination, the mold release was allowed to remain on the surface of the composite during subsequent adhesive bonding.

### Adhesive Composite Bonding

Co-cured panels were prepared using the procedure detailed above under "Co-Cure".

Secondary bonding of composite panels was done using the FM 309-1 adhesive cure profile (3 °F min⁻¹ to 350°F (3 °C min⁻¹ to 177 °C) and hold for 90 min under 276 kPa (40 psi)).

Staged composite panels (25%, 50%, and 75%) were bonded by heating at 3 °F/min to 350°F (3 °C min⁻¹ to 177 °C) and holding for 120 min under 276 kPa (40 psi). Adhesive bonding was performed by applying the adhesive to the tool side that had been exposed to mold release. No surface preparation was used.

### Mechanical Properties

G_{1c} tests were performed according to ASTM D 5528. 0.5" lap shear tests were performed by following ASTM D 1002.

### EXAMPLE 1

In this example, bonded composite panels were fabricated using CYCOM 5320-1 prepreg and bonded according to the co-cure, staged bonding, and secondary bonding processes as described above. The bonded panels were cut to size and tested to determine G_{1c} and 0.5" lap shear. The results are shown below in Table 1.

**TABLE 1**

| **Test** | **Temperature** | **Co-Cure** | **25 % Cure** | **50 % Cure** | **75 % Cure** | **Secondary Bonded** |
|---|---|---|---|---|---|---|
| 0.5" lap shear, MPa (psi) | 75°F (24°C) | 33.59 (4872) | 26.51 (3845) | 26.82 (3890) | 3.87 (562) | 0 |
| | 250°F (121 °C) | 27.68 (4015) | 24.35 (3532) | 17.31 (2510) | 3.54 (513) | 0 |
| G_{1c}, J/m² | 75 °F (24°C) | 1886 | 1694 | 1679 | 0 | 0 |

As can be seen from the above Table 1, lap shear strength decreases significantly as the cure level of staged composite panel increases. The lap shear value for co-cured panel was 33.59 MPa (4872 psi) and 27.68 MPa (4015 psi) at 24°C (75 °F) and 121°C (250 °F), respectively. The staged panels at 25% and 50% cure had similar room temperature performance (3845 psi at 25% cure and 3890 psi at 50% cure), but the 25% staged material had significantly higher strength at 250 °F than the 50% staged panel. The panel which had been pre-cured to 75 % exhibited very poor performance of 3.87 MPa (562 psi) at 24°C (75 °F) and 3.54 MPa (513 psi) at 121°C (250 °F), while the secondary bonded panels showed no adhesion between the adhesive and composite as mentioned above. For comparison, the co-cure lap shear results are shown as well.

The effect of staging composite panels on the G_{1c} properties was also significant as can be seen from Table 1. The staged panel had a room temperature G_{1c} value of 1694 J/m² when staged at 25 % and a G_{1c} value of 1679 J/m² when staged at 50 %. The staged panels that were staged to 75 % and 100 % cure levels showed no adhesion so G_{1c} was not measured on those samples. Additionally, the fracture mechanism was predominantly cohesive in the staged panels.

### EXAMPLE 2

In this example, composite panels were fabricated using an epoxy/carbon fiber prepreg that is different from CYCOM 5320-1, and bonded using co-cure, staged bonding, and secondary bonding processes as described above. G_{1c} and 0.5" lap shear panels were cut to size and tested. The results are shown below in Table 2.

**TABLE 2**

| **Test** | **Temperature** | **Co-Cure** | **25 % Cure** | **50 % Cure** | **75 % Cure** | **Secondary Bonded** |
|---|---|---|---|---|---|---|
| 0.5" lap shear, MPa (psi) | 75°F (24°C) | 32.00 (4641) | 26.03 (3776) | 28.48 (4130) | 1.84 (267) | 1.38 (200) |
| | 250°F (121 °C) | 30.36 (4403) | 18.04 (2616) | 23.56 (3417) | 2.54 (368) | 0 |
| G_{1c}, J/m² | 75°F (24°C) | - | 1811 | 1326 | 0 | 0 |

The table above shows that 25 % and 50 % staged panels were able to bond through surface contamination. The 75 % and secondary staged panels were fully cured also but did not retain enough chemically active functional groups at the surface to form covalent bonds through the surface contamination.

### Interface Diffusion

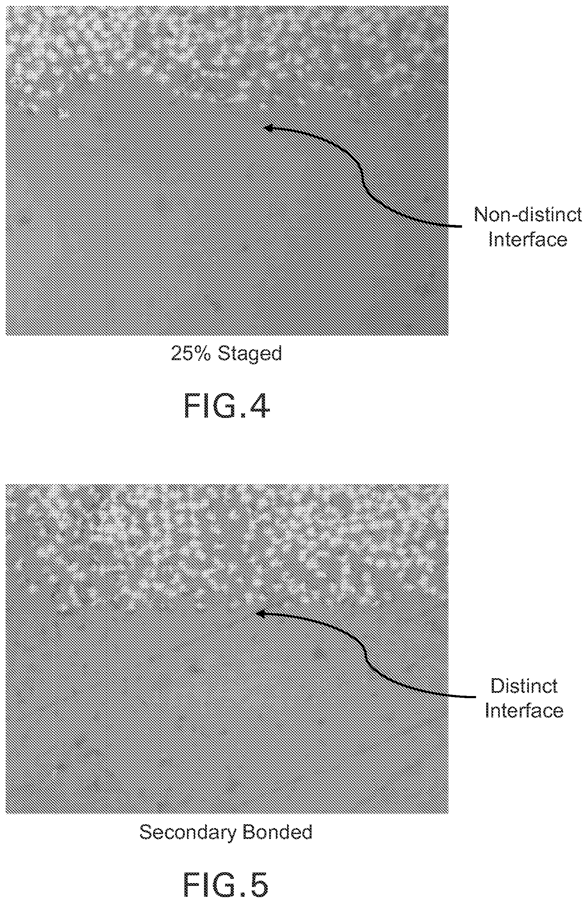

Two CYCOM 5320-based prepreg panels that have been staged at 25 % cure level were bonded using FM 309-1 film adhesive. The composite was bonded using the FM 3090-1 cure profile discussed above, and the composite-adhesive interface was studied under microscope. FIG. 4 is a micrograph image showing the composite-adhesive interface at 50x magnification. As can be seen in the micrograph image of FIG. 4, the composite-adhesive interface shows intermingling between the adhesive and composite resins. A clear boundary does not exist, but instead there is an area between the fibers and the adhesive that is a mix of the adhesive and composite resins. The bonded structure allowed for physical diffusion of matrix resins in the adhesive and composite such that the intermingling of resins essentially erases the adhesive-composite interface. This shows that intermingling provided a physical pathway for covalent bonding to occur between adhesive and composite.

For comparison, two fully cured (i.e., 100% cure) CYCOM 5320-based prepreg panels were also bonded using the same FM 309-1 film adhesive. FIG. 5 is a micrograph image showing the composite-adhesive interface at 50x magnification. A distinct barrier or interface can be seen from FIG. 5, suggesting that there is no intermingling between the adhesive and composite resin.

## Claims

1. A composite bonding process comprising:
a) forming two curable prepreg layups comprised of a plurality of prepreg plies arranged in a stacking arrangement, each prepreg ply comprising a layer of reinforcing fibers impregnated with a curable, thermoset matrix resin;
b) partially curing one of the prepreg layups to a degree of cure of 25% to 70%, determined by the method disclosed in the description;
c) applying a curable adhesive on at least one of the prepreg layups;
d) joining the prepreg layups to each other with the curable adhesive between the prepreg layups; and
e) co-curing the joined prepreg layups to form a fully cured, bonded composite structure,
wherein co-curing (e) is carried out using an autoclave or an out-of-clave process; whereby, following co-curing step (e), the adhesive is chemically bonded to and mechanically diffused with the resin matrix of the prepreg layup resulting in a chemically bonded interface between the adhesive and each prepreg layup.

2. The process of claim 1, wherein the degree of cure in step (b) is within the range of 25%-50% cure; or 40%-60%.

3. The process of any one of claims 1-2, wherein steps (a)-(d) are carried out without any intervening surface treatment to physically modify the surfaces of the prepreg layups.

4. The process of claim 3, wherein the intervening surface treatment includes applying a peel ply, and treatments that physically roughen or texturize the surface.

5. The process of any one of claims 1-4, wherein the fully cured, bonded composite structure exhibits an adhesive bond strength of greater than 4,000 psi (27.6 MPa) at about 75°F (or 24°C), and greater than 3,000 psi (20.7 MPa) at 250 °F (or 121°C), as measured by a Lap Shear Test using ASTM D1002.

6. The process of any one of claims 1-5, wherein the fully cured, bonded composite structure provides a cohesive failure and exhibits a mode I fracture toughness of approximately 650 J/m² or greater as determined by G_{1c} testing according to ASTM D5528.

7. The process of any one of claims 1-6, wherein the thermoset matrix resin comprises one or more epoxy resins and a curing agent.

8. The process of any one of claims 1-7, wherein the curable adhesive comprises one or more epoxy resins and a curing agent.

9. The process of claim 1, wherein each prepreg layup is formed on a non-planar, three-dimensional molding surface and at least a portion of the prepreg layup conforms to the molding surface.

10. The process of claim 9, wherein the molding surface has a mold release coating thereon, and
wherein the joining of the prepreg layups is carried out without any intervening step of removing residual mold release coating on the prepreg layups, and
bonding can occur with the presence of contaminant on the joined surfaces of the prepreg layups.

11. The process of claim 9 or 10, wherein the prepreg layups are joined with the sides that were in contact with the molding surface facing each other.

12. The process of claim 1, wherein
the prepreg layup to be partially cured is formed on a non-planar, three-dimensional molding surface, which has a mold release coating thereon, and at least a portion of the prepreg layup conforms to the molding surface,
at step (d), the side of the prepreg layup that was in contact with the molding surface is joined to the other composite substrate, and
the joining of the composite substrates is carried out without any intervening step of removing residual mold release coating on the prepreg layup.

## Patentansprüche

1. Verbundstoff-Bondingverfahren, umfassend:
a) Bilden von zwei härtbaren Prepreg-Lagenschichten, die aus einer Mehrzahl von Prepreg-Lagen bestehen, welche gestapelt angeordnet sind, wobei jede Prepreg-Lage eine Lage von Verstärkungsfasern umfasst, die mit einem härtbaren, duroplastischen Matrixharz imprägniert sind;
b) teilweises Härten von einer der Prepreg-Lagenschichten bis zu einem Härtungsgrad von 25 % bis 70 %, bestimmt mit dem in der Beschreibung offenbarten Verfahren;
c) Auftragen eines härtbaren Klebstoffs auf mindestens eine der Prepreg-Lagenschichten;
d) Verbinden der Prepreg-Lagenschichten miteinander mit dem härtbaren Klebstoff zwischen den Prepreg-Lagenschichten; und
e) gemeinsames Härten der verbundenen Prepreg-Lagenschichten, um eine vollständig gehärtete, bondierte Verbundstruktur zu bilden,
wobei das gemeinsame Härten (e) unter Verwendung eines Verfahrens mit einem Autoklav oder eines Verfahrens ohne einen Autoklav durchgeführt wird; wobei der Klebstoff nach dem Schritt des gemeinsamen Härtens (e) an die Harzmatrix der Prepreg-Lagenschichten chemisch bondiert und mit dieser mechanisch diffundiert wird, was zu einer chemisch bondierten Grenzschicht zwischen dem Klebstoff und jeder Prepreg-Lagenschicht führt.

2. Verfahren nach Anspruch 1, wobei der Härtungsgrad in Schritt (b) im Bereich von 25 % bis 50 % oder 40 % bis 60 % Härtung liegt.

3. Verfahren nach einem der Ansprüche 1 bis 2, wobei die Schritte (a) bis (d) ohne eine dazwischenliegende Oberflächenbehandlung durchgeführt werden, um die Oberflächen der Prepreg-Lagenschichten physikalisch zu modifizieren.

4. Verfahren nach Anspruch 3, wobei die dazwischenliegende Oberflächenbehandlung das Aufbringen einer Abziehschicht und Behandlungen, die die Oberfläche physikalisch aufrauen oder strukturieren, umfasst.

5. Verfahren nach einem der Ansprüche 1 bis 4, wobei die vollständig gehärtete, bondierte Verbundstruktur eine Haftfestigkeit von mehr als 4.000 psi (27,6 MPa) bei etwa 75 °F (bzw. 24 °C) und mehr als 3.000 psi (20,7 MPa) bei 250 °F (bzw. 121 °C), gemessen mit einem Überlappungsschertest unter Verwendung von ASTM D1002, aufweist.

6. Verfahren nach einem der Ansprüche 1 bis 5, wobei die vollständig gehärtete, bondierte Verbundstruktur ein Kohäsionsversagen bereitstellt und eine Modus-I-Bruchzähigkeit von etwa 650 J/m² oder größer, bestimmt durch G_{1c}-Testen gemäß ASTM D5528, aufweist.

7. Verfahren nach einem der Ansprüche 1 bis 6, wobei das duroplastische Matrixharz eines oder mehrere Epoxidharze und ein Härtungsmittel umfasst.

8. Verfahren nach einem der Ansprüche 1 bis 7, wobei der härtbare Klebstoff eines oder mehrere Epoxidharze und ein Härtungsmittel umfasst.

9. Verfahren nach Anspruch 1, wobei jede Prepreg-Lagenschicht auf einer nicht-planen, dreidimensionalen Formfläche gebildet wird und sich mindestens ein Teil der Prepreg-Lagenschicht an die Formfläche anpasst.

10. Verfahren nach Anspruch 9, wobei die Formfläche eine Formtrennbeschichtung aufweist und
wobei das Verbinden der Prepreg-Lagenschichten ohne einen dazwischenliegenden Schritt des Entfernens der restlichen Formtrennbeschichtung auf den Prepreg-Lagenschichten durchgeführt wird, und
das Bondieren mit dem Vorhandensein von Verunreinigungen auf den verbundenen Oberflächen der Prepreg-Lagenschichten stattfinden kann.

11. Verfahren nach Anspruch 9 oder 10, wobei die Prepreg-Lagenschichten mit den Seiten verbunden sind, die in Kontakt mit der Formfläche standen und einander zugewandt sind.

12. Verfahren nach Anspruch 1, wobei
die teilweise zu härtende Prepreg-Lagenschicht auf einer nicht-planen, dreidimensionalen Formfläche gebildet wird, die eine Formtrennbeschichtung aufweist, und sich mindestens ein Teil der Prepreg-Lagenschicht an die Formfläche anpasst,
in Schritt (d) die Seite der Prepreg-Lagenschicht, die mit der Formfläche in Kontakt stand, mit dem anderen Verbundsubstrat verbunden wird, und
das Verbinden der Verbundsubstrate ohne einen dazwischenliegenden Schritt des Entfernens der restlichen Formtrennbeschichtung auf den Prepreg-Lagenschichten durchgeführt wird.

## Revendications

1. Procédé de collage de composite comprenant :
a) la formation de deux empilements de couches de préimprégné durcissables constitués d'une pluralité de plis de préimprégné agencés suivant un agencement empilé, chaque pli de préimprégné comprenant une couche de fibres renforçantes imprégnées d'une résine de matrice thermorigide durcissable ;
b) le durcissement partiel de l'un des empilements de couches de préimprégné à un degré de durcissement, déterminé par la méthode exposée dans la description, de 25 % à 70 % ;
c) l'application d'un adhésif durcissable sur au moins l'un des empilements de couches de préimprégné ;
d) l'assemblage des empilements de couches de préimprégné l'un avec l'autre avec l'adhésif durcissable entre les empilements de couches de préimprégné ; et
e) le co-durcissement des empilements de couches de préimprégné assemblés pour former une structure composite collée totalement durcie,
dans lequel le co-durcissement (e) est effectué à l'aide d'un procédé en autoclave ou hors d'un autoclave ; moyennant quoi, après l'étape de co-durcissement (e), l'adhésif est chimiquement collé à la matrice en résine de l'empilement de couches de préimprégné et a mécaniquement diffusé dans celle-ci ce qui résulte en une interface chimiquement collée entre l'adhésif et chaque empilement de couches de préimprégné.

2. Procédé selon la revendication 1, dans lequel le degré de durcissement dans l'étape (b) est dans la plage de durcissement de 25 %-50 % ; ou de 40 %-60 %.

3. Procédé selon l'une quelconque des revendications 1-2, dans lequel les étapes (a)-(d) sont effectuées sans un quelconque traitement de surface intermédiaire pour modifier physiquement les surfaces des empilements de couches de préimprégné.

4. Procédé selon la revendication 3, dans lequel le traitement de surface intermédiaire comprend l'application d'un pli de pelage et les traitements qui rugosifient ou texturent physiquement la surface.

5. Procédé selon l'une quelconque des revendications 1-4, dans lequel la structure composite collée totalement durcie présente une résistance de collage de l'adhésif, telle que mesurée par un essai de cisaillement interlaminaire à l'aide de la méthode ASTM D1002, supérieure à 4 000 lb/po² (27,6 MPa) à environ 75 °F (ou 24 °C) et supérieure à 3 000 lb/po² (20,7 MPa) à 250 °F (ou 121 °C).

6. Procédé selon l'une quelconque des revendications 1-5, dans lequel la structure composite collée totalement durcie permet une rupture par rupture de cohésion et présente une ténacité à la fracture en mode I telle que déterminée par l'essai de mesure de G_{1c} selon la méthode ASTM D5528 supérieure ou égale à approximativement 650 J/m².

7. Procédé selon l'une quelconque des revendications 1-6, dans lequel la résine de matrice thermorigide comprend une ou plusieurs résines époxy et un agent durcisseur.

8. Procédé selon l'une quelconque des revendications 1-7, dans lequel l'adhésif durcissable comprend une ou plusieurs résines époxy et un agent durcisseur.

9. Procédé selon la revendication 1, dans lequel chaque empilement de couches de préimprégné est formé sur une surface de moulage tridimensionnelle non plane et au moins une partie de l'empilement de couches de préimprégné épouse la surface de moulage.

10. Procédé selon la revendication 9, dans lequel un revêtement de démoulage se trouve sur la surface de moulage et
dans lequel l'assemblage des empilements de couches de préimprégné est effectué sans une quelconque étape intermédiaire d'élimination de revêtement de démoulage résiduel sur les empilements de couches de préimprégné et
le collage peut avoir lieu en présence de contaminant sur les surfaces assemblées des empilements de couches de préimprégné.

11. Procédé selon la revendication 9 ou 10, dans lequel les empilements de couches de préimprégné sont assemblés avec les côtés qui étaient en contact avec la surface de moulage en regard l'un de l'autre.

12. Procédé selon la revendication 1, dans lequel
l'empilement de couches de préimprégné devant être partiellement durci est formé sur une surface de moulage tridimensionnelle non plane, sur laquelle se trouve un revêtement de démoulage, et au moins une partie de l'empilement de couches de préimprégné épouse la surface de moulage,
à l'étape (d), le côté de l'empilement de couches de préimprégné qui était en contact avec la surface de moulage est assemblé avec l'autre substrat composite et
l'assemblage des substrats composites est effectué sans une quelconque étape intermédiaire d'élimination de revêtement de démoulage résiduel sur l'empilement de couches de préimprégné.
